# EUROPÄISCHE PATENTSCHRIFT

(11) **EP 2 616 654 B1**
(45) Veröffentlichungstag und Bekanntmachung des Hinweises auf die Patenterteilung: **15.10.2014**
(21) Anmeldenummer: 11734001.8
(22) Anmeldetag: 27.06.2011
(51) Int. Cl.: F02D 41/04, F02D 41/00, F02D 13/02, F02D 23/00

(54) **VERFAHREN ZUM BETREIBEN EINER BRENNKRAFTMASCHINE MIT VARIABLEM VENTILANTRIEB**
METHOD FOR OPERATING AN INTERNAL COMBUSTION ENGINE HAVING A VARIABLE VALVE OPERATING MECHANISM
PROCÉDÉ POUR FAIRE FONCTIONNER UN MOTEUR À COMBUSTION INTERNE À COMMANDE DE SOUPAPES VARIABLE

(30) Priorität: 16.09.2010 DE 102010045710
(43) Veröffentlichungstag der Anmeldung: 24.07.2013
(73) Patentinhaber: Volkswagen Aktiengesellschaft, 38440 Wolfsburg (DE)
(72) Erfinder: KÜHLMEYER, Jens, 38518 Gifhorn (DE); GNEGEL, Paul, 38165 Lehre (DE); NOODT, Florian, 38165 Lehre OT Flechtorf (DE)
(86) Internationale Anmeldenummer: PCT/EP2011/003149
(87) Internationale Veröffentlichungsnummer: WO 2012/034611

(56) Entgegenhaltungen:
- US-A1- 2006 201 152
- US-A1- 2010 217 504

## Beschreibung

Die Erfindung betrifft ein Verfahren zum Betreiben einer Brennkraftmaschine, insbesondere eines Kraftfahrzeugs, wobei in Abhängigkeit von einem Betriebszustand der Brennkraftmaschine ein hinsichtlich Ventilsteuerzeiten und/oder Ventilhub variabler Ventilantrieb für mindestens ein Einlassventil und mindestens ein Auslassventil mindestens eines Arbeitszylinders der Brennkraftmaschine angesteuert wird, gemäß dem Oberbegriff des Patentanspruchs 1.

Mittels Abgasturbolader (ATL) aufgeladene Motoren zeigen einen prinzipiell verzögerten Ladedruckaufbau, das sog. Turboloch. Dies folgt aus der Tatsache, dass speziell beim gedrosselt betriebenen Ottomotor der an der Turbine zur Verfügung stehende Abgasmassenstrom sehr gering ist und damit wenig Abgasenergie als Turbinenantriebsleistung zur Verfügung steht. Erst mit steigendem Saugrohrdruck nimmt der Massenstrom und damit auch die zur Verfügung stehende Abgasenergie hinter dem Motor zu. Bei Lastanforderungen ergibt sich also immer eine Ziellücke zwischen dem erforderlichen Soll-Massenstrom durch den Motor und dem - in den ersten Momenten - tatsächlichen Ist-Massenstrom.

Aus der DE 10 2004 026 405 B4 ist ein Verfahren zum Betreiben einer Brennkraftmaschine mit Ladereinrichtung und mit einem im Hinblick auf seine Einlassventilsteuerzeiten und/oder seinen Einlassventilhub variablen Einlassventilantrieb bekannt. Bei Erkennung einer positiven Lastanforderung während des Laderbetriebs wird hierbei der mindestens eine variable Einlassventilantrieb derart gesteuert, dass eine vorhandene Hubreserve und/oder Einlass-Schließt-Steuerzeitenreserve zur Erhöhung der Ladungsmenge ausgenutzt wird. Hierdurch kann die zur Erfüllung der Lastanforderung erforderliche Zeit erheblich verringert und somit das Ansprechverhalten der aufgeladenen Brennkraftmaschine verkürzt werden.

Der Erfindung liegt die Aufgabe zugrunde, eine betriebspunktabhängige Steuer-/Regelstrategie für einen variablen Ventiltrieb einer Brennkraftmaschine mit verbesserter Symbiose zwischen einem Brennverfahren und der Leistung eines Abgasturboladers (ATL) zur Verfügung zu stellen.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Verfahren der o.g. Art erfindungsgemäß vorgesehen, dass in einem ersten Betriebszustand der Brennkraftmaschine mit hoher Lastanforderung und kleiner Drehzahl ein erster Ventilbetriebszustand des variablen Ventiltriebs eingestellt wird, wobei in dem ersten Ventilbetriebszustand mindestens ein Einlassventil derart eingestellt wird, dass sich eine Erhöhung der Füllung des diesem Einlassventil zugeordneten Arbeitszylinders ergibt; dass in einem zweiten Betriebszustand der Brennkraftmaschine mit hoher Lastanforderung und hoher Drehzahl ein zweiter Ventilbetriebszustand des variablen Ventiltriebs eingestellt wird, wobei in dem zweiten Ventilbetriebszustand mindestens ein Einlassventil und mindestens ein Auslassventil mindestens eines Arbeitszylinders derart eingestellt werden, dass sich eine Überschneidung der Öffnungszeiten dieses Einlassventils und Auslassventils sowie ein minimierter Kraftstoffverbrauch ergibt; dass in einem dritten Betriebszustand der Brennkraftmaschine mit keiner oder geringer Lastanforderung unterhalb eines vorbestimmten Schwellwertes und bei niedriger bis mittlerer Teillast ein dritter Ventilbetriebszustand des variablen Ventiltriebs eingestellt wird, wobei in dem dritten Ventilbetriebszustand mindestens ein Einlassventil und mindestens ein Auslassventil mindestens eines Arbeitszylinders derart eingestellt werden, dass sich eine Überschneidung der Öffnungszeiten dieses Einlassventils und Auslassventils sowie ein minimierter Kraftstoffverbrauch ergibt; dass in einem vierten Betriebszustand der Brennkraftmaschine mit keiner oder geringer Lastanforderung unterhalb eines vorbestimmten Schwellwertes und bei hoher Teillast ein vierter Ventilbetriebszustand des variablen Ventiltriebs eingestellt wird, wobei in dem vierten Ventilbetriebszustand mindestens ein Einlassventil und mindestens ein Auslassventil mindestens eines Arbeitszylinders derart eingestellt werden, dass sich eine Überschneidung der Öffnungszeiten dieses Einlassventils und Auslassventils sowie ein minimierter Kraftstoffverbrauch ergibt; dass in einem fünften Betriebszustand der Brennkraftmaschine mit hoher Lastanforderung oberhalb eines vorbestimmten Schwellwertes und bei hoher Teillast ein fünfter Ventilbetriebszustand des variablen Ventiltriebs eingestellt wird, wobei in dem fünften Ventilbetriebszustand mindestens ein Einlassventil und mindestens ein Auslassventil mindestens eines Arbeitszylinders derart eingestellt werden, dass eine zeitliche Überschneidung der Öffnungszeiten dieses Einlassventils und Auslassventils größer ist als bei einer Einstellung mit minimiertem Kraftstoffverbrauch; und dass in einem sechsten Betriebszustand der Brennkraftmaschine mit maximalem Drehmoment ein sechster Ventilbetriebszustand des variablen Ventiltriebs eingestellt wird, wobei in dem sechsten Ventilbetriebszustand mindestens ein Einlassventil in einem Expansionsmodus oder gemäß einem Miller-/Atkinsonverfahren betrieben wird.

Dies hat den Vorteil, dass durch die zusätzlichen Freiheiten eines variablen Ventiltriebes (VVT) die Ventiltriebsstrategie für die jeweiligen Betriebscharakteristika Dynamik, Drehmoment bei niedrigen Drehzahlen (LowEnd Torque), Nennleistung, Teillast usw. derart gewählt werden, dass die Wechselwirkungen zwischen Abgasturbolader und Brennverfahren immer optimal sind.

Eine weitere Verbesserung der Optimierung der Wechselwirkung zwischen Abgasturbolader und Brennverfahren wird dadurch erzielt, dass der erste Ventilbetriebszustand des variablen Ventiltriebs eingestellt wird, wenn sich der erste Betriebszustand in einem ersten Bereich in einem Last-Drehzahl-Kennfeld der Brennkraftmaschine befindet, welcher durch eine Drehzahl von 1.000 1/min bis 2.000 1/min, insbesondere bis 2.500 1/min, 3.500 1/min oder 4.500 1/min, ein effektives Motormoment von 0 und eine Funktion des maximal von der Brennkraftmaschine abgegebenen Drehmomentes in Abhängigkeit von der Drehzahl begrenzt ist (Dynamik bei tiefen Drehzahlen).

Eine weitere Verbesserung der Optimierung der Wechselwirkung zwischen Abgasturbolader und Brennverfahren wird dadurch erzielt, dass der erste Ventilbetriebszustand beendet wird, wenn das von der Brennkraftmaschine abgegebene Drehmoment ein vorbestimmtes Drehmoment, insbesondere das angeforderte Drehmoment, erreicht hat.

Eine weitere Verbesserung der Optimierung der Wechselwirkung zwischen Abgasturbolader und Brennverfahren wird dadurch erzielt, dass der zweite Ventilbetriebszustand des variablen Ventiltriebs eingestellt wird, wenn sich der zweite Betriebszustand in einem zweiten Bereich in einem Last-Drehzahl-Kennfeld der Brennkraftmaschine befindet, welcher durch eine Drehzahl von 2.000 1/min, insbesondere von 2.500 1/min, 3.500 1/min oder 4.500 1/min, bis zur maximalen Drehzahl der Brennkraftmaschine, ein effektives Motormoment von 0 und eine Funktion des maximal von der Brennkraftmaschine abgegebenen Drehmomentes in Abhängigkeit von der Drehzahl begrenzt ist (Dynamik bei hohen Drehzahlen).

Eine weitere Verbesserung der Optimierung der Wechselwirkung zwischen Abgasturbolader und Brennverfahren wird dadurch erzielt, dass der dritte Ventilbetriebszustand des variablen Ventiltriebs eingestellt wird, wenn sich der dritte Betriebszustand in einem dritten Bereich in einem Last-Drehzahl-Kennfeld der Brennkraftmaschine befindet, welcher durch eine Drehzahl von 1.000 1/min bis zur maximalen Drehzahl der Brennkraftmaschine, ein effektives Motormoment von 0 und ein effektives Motormoment von 40 % bis 80% des maximal von der Brennkraftmaschine abgegebenen Drehmomentes begrenzt ist (Konstantbetrieb bei tiefer Teillast).

Eine weitere Verbesserung der Optimierung der Wechselwirkung zwischen Abgasturbolader und Brennverfahren wird dadurch erzielt, dass der vierte Ventilbetriebszustand des variablen Ventiltriebs eingestellt wird, wenn sich der vierte Betriebszustand in einem vierten Bereich in einem Last-Drehzahl-Kennfeld der Brennkraftmaschine befindet, welcher durch eine Drehzahl von 1.000 1/min bis zur maximalen Drehzahl der Brennkraftmaschine, ein effektives Motormoment von 40 % bis 80% des maximal von der Brennkraftmaschine abgegebenen Drehmomentes und eine Funktion des maximal von der Brennkraftmaschine abgegebenen Drehmomentes in Abhängigkeit von der Drehzahl begrenzt ist (Konstantbetrieb bei hoher Teillast).

Eine weitere Verbesserung der Optimierung der Wechselwirkung zwischen Abgasturbolader und Brennverfahren wird dadurch erzielt, dass der fünfte Ventilbetriebszustand des variablen Ventiltriebs eingestellt wird, wenn sich der fünfte Betriebszustand in einem fünften Bereich in einem Last-Drehzahl-Kennfeld der Brennkraftmaschine befindet, welcher durch eine Drehzahl von 1.000 1/min bis zur maximalen Drehzahl der Brennkraftmaschine, ein effektives Motormoment von 40 % bis 80% des maximal von der Brennkraftmaschine abgegebenen Drehmomentes und eine Funktion des maximal von der Brennkraftmaschine abgegebenen Drehmomentes in Abhängigkeit von der Drehzahl begrenzt ist (Dynamik bei hohem effektivem Mitteldruck (pme) bzw. Einlassdruck).

Eine weitere Verbesserung der Optimierung der Wechselwirkung zwischen Abgasturbolader und Brennverfahren wird dadurch erzielt, dass der fünfte Ventilbetriebszustand des variablen Ventiltriebs um eine vorbestimmte Anzahl von Zyklen in dem Arbeitszylinder verzögert eingestellt wird, wobei die vorbestimmte Anzahl von Zyklen 1 bis 10 Zyklen beträgt.

Eine weitere Verbesserung der Optimierung der Wechselwirkung zwischen Abgasturbolader und Brennverfahren wird dadurch erzielt, dass der sechste Ventilbetriebszustand des variablen Ventiltriebs eingestellt wird, wenn sich der sechste Betriebszustand in einem sechsten Bereich in einem Last-Drehzahl-Kennfeld der Brennkraftmaschine befindet, welcher durch eine Funktion des maximal von der Brennkraftmaschine abgegebenen Drehmomentes in Abhängigkeit von der Drehzahl bestimmt ist (Konstantbetrieb VL-Linie).

Eine weitere Verbesserung der Optimierung der Wechselwirkung zwischen Abgasturbolader und Brennverfahren wird dadurch erzielt, dass in dem ersten Betriebszustand anstatt dem ersten Ventilbetriebszustand der fünfte Ventilbetriebszustand des variablen Ventiltriebs eingestellt wird, wenn sich der erste Betriebszustand in einem siebten Bereich innerhalb des ersten Bereiches in einem Last-Drehzahl-Kennfeld der Brennkraftmaschine befindet, welcher innerhalb des ersten Bereiches durch eine Funktion des maximal von der Brennkraftmaschine abgegebenen Drehmomentes in Abhängigkeit von der Drehzahl und ein effektives Motormoment von 40 % bis 80% des maximal von der Brennkraftmaschine abgegebenen Drehmomentes begrenzt ist (Dynamik bei kleiner Drehzahl und hohem pme bzw. Einlassdruck).

Eine besonders gute und zuverlässige Erkennung des momentanen Betriebszustands der Brennkraftmaschine erzielt man dadurch, dass als Eingangsparameter zur Erkennung des jeweiligen Betriebszustandes der Brennkraftmaschine ein Saugrohrdruck, eine Saugrohrtemperatur, eine Motordrehzahl, eine aktuelle Ist-Füllung, eine Abweichung zwischen Soll- und Ist-Füllung, ein Lastanforderungsgradient, beispielsweise in Form eines Fahrpedalgradienten eines Fahrpedals eines Kraftfahrzeugs, in dem die Brennkraftmaschine angeordnet ist, und/oder eine Volllast(VL)-Erkennung und/oder ggf. weitere Betriebsparameter der Brennkraftmaschine verwendet werden, wobei die Größen entweder direkt gemessen oder in entsprechenden Modellen berechnet werden.

Eine besonders gute und zuverlässige Erkennung der Bedingung für die Lastanforderung und die Motordrehzahl erzielt man dadurch, dass zur Erkennung der Bedingung für die Lastanforderung ein Schwellwert für eine Differenz zwischen einem Sollladedruck und einem Istladedruck, ein Schwellwert für eine Differenz zwischen einer Sollfüllung und einer Istfüllung und/oder ein Schwellwert für einen Lastanforderungsgradienten, beispielsweise in Form eines Fahrpedalgradienten eines Fahrpedals eines Kraftfahrzeugs, in dem die Brennkraftmaschine angeordnet ist, und für die Erkennung der Bedingung für die Motordrehzahl ein Schwellwert für einen Motordrehzahlbereich verwendet wird.

Eine besonders gute und zuverlässige Erkennung der Bedingungen für den sechsten Betriebszustand erzielt man dadurch, dass zur Erkennung der Bedingungen für den sechsten Betriebszustand eine Volllasterkennung und ein Schwellwert für die Differenz zwischen einem Sollladedruck und einem Istladedruck und/oder ein Schwellwert für die Differenz zwischen einer Sollfüllung und einer Istfüllung verwendet wird.

Eine weitere Verbesserung der Optimierung der Wechselwirkung zwischen Abgasturbolader und Brennverfahren wird dadurch erzielt, dass von dem ersten Ventilbetriebszustand in den vierten oder sechsten Ventilbetriebszustand gewechselt wird, wenn das von der Brennkraftmaschine abgegebene Drehmoment ein vorbestimmtes Drehmoment, insbesondere das angeforderte Drehmoment, erreicht hat.

Eine weitere Verbesserung der Optimierung der Wechselwirkung zwischen Abgasturbolader und Brennverfahren wird dadurch erzielt, dass in dem ersten Ventilbetriebszustand mindestens ein Auslassventil auf eine kurze Öffnungsdauer von 170° KW bis 185° KW, insbesondere 170° KW bis 180° KW, eingestellt wird.

Die Erfindung wird im Folgenden anhand der Zeichnung näher erläutert. Diese zeigt in
- Fig. 1: eine beispielhafte Ausführungsform einer Brennkraftmaschine zur Ausführung des erfindungsgemäßen Verfahrens,
- Fig. 2: ein Last-Drehzahl-Kennfeld der Brennkraftmaschine gemäß Fig. 1,
- Fig. 3: ein Struktogramm für die Freischaltung eines ersten Ventilbetriebszustandes eines variablen Ventiltriebes einer Brennkraftmaschine in Abhängigkeit von einem Betriebszustand der Brennkraftmaschine,
- Fig. 4: ein Struktogramm für die Freischaltung eines zweiten Ventilbetriebszustandes eines variablen Ventiltriebes einer Brennkraftmaschine in Abhängigkeit von einem Betriebszustand der Brennkraftmaschine,
- Fig. 5: ein Struktogramm für die Freischaltung eines dritten Ventilbetriebszustandes eines variablen Ventiltriebes einer Brennkraftmaschine in Abhängigkeit von einem Betriebszustand der Brennkraftmaschine,
- Fig. 6: ein Struktogramm für die Freischaltung eines vierten Ventilbetriebszustandes eines variablen Ventiltriebes einer Brennkraftmaschine in Abhängigkeit von einem Betriebszustand der Brennkraftmaschine,
- Fig. 7: ein Struktogramm für die Freischaltung eines fünften Ventilbetriebszustandes eines variablen Ventiltriebes einer Brennkraftmaschine in Abhängigkeit von einem Betriebszustand der Brennkraftmaschine und
- Fig. 8: ein Struktogramm für die Freischaltung eines sechsten Ventilbetriebszustandes eines variablen Ventiltriebes einer Brennkraftmaschine in Abhängigkeit von einem Betriebszustand der Brennkraftmaschine.

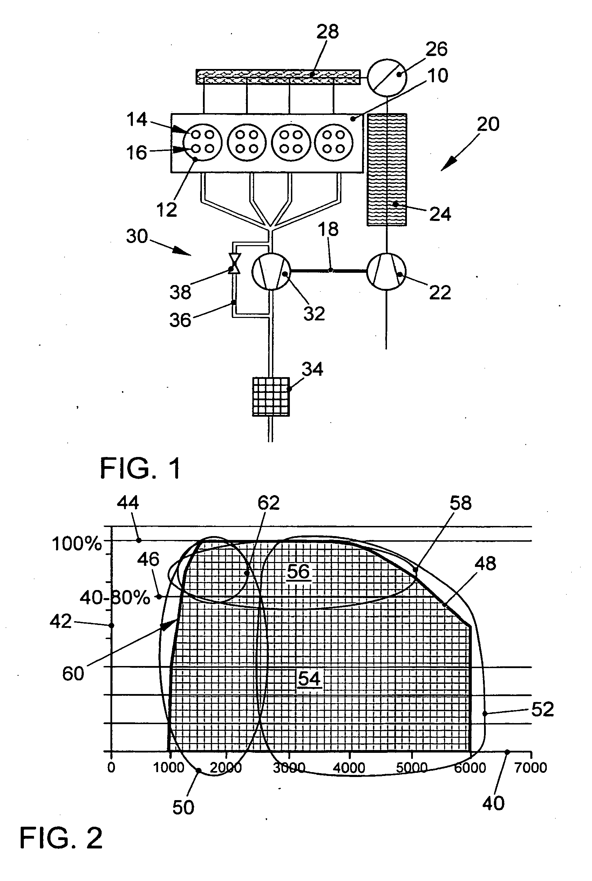

Die in Fig. 1 beispielhaft dargestellte, bevorzugte Ausführungsform einer erfindungsgemäßen Brennkraftmaschine umfasst einen Motorblock 10 mit Arbeitszylindern 12, wobei jedem Arbeitszylinder 12 mindestens ein Einlassventil 14 und mindestens ein Auslassventil 16 zugeordnet ist, und einen Abgasturbolader 18. Die Brennkraftmaschine weist einen hinsichtlich Ventilsteuerzeiten und/oder Ventilhub variablen bzw. variabel einstellbaren Ventilantrieb (VVT) für mindestens ein Einlassventil 14 und mindestens ein Auslassventil 16 mindestens eines Arbeitszylinders 12 der Brennkraftmaschine auf.

Den Arbeitszylindern 12 wird über die Einlassventile 14 mittels einer Verbrennungsluftanlage 20 Verbrennungsluft zugeführt. In der Verbrennungsluftanlage 20 ist in Strömungsrichtung der Verbrennungsluft gesehen folgendes angeordnet, ein Verdichter 22 des Abgasturboladers 18, ein optionaler erster Ladeluftkühler (LLK) 24, eine Drosselklappe (DKL) 26 und ein zweiter Ladeluftkühler (LLK) 28.

Von den Arbeitszylindern 12 wird über die Auslassventile 16 mittels einer Abgasanlage 30 Abgas abgeführt. In der Abgasanlage 30 ist in Strömungsrichtung des Abgases gesehen folgendes angeordnet, eine Turbine 32 des Abgasturboladers 18 und ein Katalysator 34. Die Turbine 32 weist eine Bypassleitung 36 mit einem Wastgate-Ventil 38 auf. Die Turbine 32 ist wahlweise mit einer festen oder variablen (VTG) Turbinengeometrie ausgebildet. Der Verdichter 22 ist alternativ als elektrisch angetriebener, sogenannter E-Booster ausgebildet.

In Fig. 2 ist beispielhaft ein Last-Drehzahl-Kennfeld für die Brennkraftmaschine gemäß Fig. 1 dargestellt, wobei auf einer horizontalen Achse 40 eine Motordrehzahl in [1/min] und auf einer vertikalen Achse 42 ein effektives Motormoment in [Nm] aufgetragen ist. Eine erste horizontale Linie 44 kennzeichnet ein maximal von der Brennkraftmaschine abgegebenes Motormoment. Dies ist als "100% Motormoment" definiert. Eine zweite horizontale Linie 46 kennzeichnet 40 % bis 60 % des maximalen Motormomentes ("100 % Motormoment"). Eine Funktion 48 veranschaulicht das maximal von der Brennkraftmaschine abgegebene Motormoment 42 in Abhängigkeit von der Drehzahl 40. Dieses ist nicht für alle Drehzahlen 40 identisch mit "100% Motormoment" 44. Bei niedrigen Drehzahlen unter ca. 1.500 1/min und bei hohen Drehzahlen über ca. 4.000 1/min ist das maximale Motormoment teilweise deutlich niedriger als "100% Motormoment" 44.

In dem Last-Drehzahl-Kennfeld gemäß Fig. 2 sind folgende Bereiche für mögliche Betriebszustände der Brennkraftmaschine definiert. Ein erster Bereich 50, welcher durch eine Drehzahl von 1.000 1/min bis 2.000 1/min, insbesondere bis 2.500 1/min, 3.500 1/min oder 4.500 1/min, ein effektives Motormoment von 0 (horizontale Achse 40) und die Funktion 48 begrenzt ist. Ein zweiter Bereich 52, welcher durch eine Drehzahl 40 von 2.000 1/min, insbesondere von 2.500 1/min, 3.500 1/min oder 4.500 1/min, bis zur maximalen Drehzahl 40 der Brennkraftmaschine, ein effektives Motormoment von 0 (horizontale Achse 40) und die Funktion 48 begrenzt ist. Die maximale Drehzahl 40 der Brennkraftmaschine beträgt in diesem Beispiel 6.000 1/min. Ein dritter Bereich 54, welcher durch eine Drehzahl 40 von 1.000 1/min bis zur maximalen Drehzahl der Brennkraftmaschine, ein effektives Motormoment von 0 (horizontale Achse 40) und ein effektives Motormoment von 40 % bis 80% des maximal von der Brennkraftmaschine abgegebenen Drehmomentes (zweite Linie 46) begrenzt ist. Ein vierter Bereich 56, welcher durch eine Drehzahl von 1.000 1/min bis zur maximalen Drehzahl der Brennkraftmaschine, ein effektives Motormoment von 40 % bis 80% des maximal von der Brennkraftmaschine abgegebenen Drehmomentes (zweite Linie 46) und die Funktion 48 begrenzt ist. Ein fünfter Bereich 58, welcher durch eine Drehzahl von 1.000 1/min bis zur maximalen Drehzahl der Brennkraftmaschine, ein effektives Motormoment von 40 % bis 80% des maximal von der Brennkraftmaschine abgegebenen Drehmomentes (zweite Linie 46) und die Funktion 48 begrenzt ist. Ein sechster Bereich 60, welcher durch die Funktion 48 bestimmt ist, d.h. alle Punkte in dem Last-Drehzahl-Kennfeld auf der maximalen Drehmomentkurve 48, bei denen das gemäß der aktuellen Drehzahl 40 maximale Drehmoment abgegeben wird. Ein siebter Bereich 62, welcher innerhalb des ersten Bereiches 50 durch die Funktion 48 und das effektive Motormoment von 40 % bis 80% des maximal von der Brennkraftmaschine abgegebenen Drehmomentes (zweite Linie 46) begrenzt ist. Der siebte Bereich 62 beinhaltet alle Punkte des Last-Drehzahl-Kennfeldes gemäß Fig. 2, die sowohl in dem ersten Bereich 50 als auch in dem fünften Bereich 58 als Schnittmenge dieser beiden Bereiche 50, 58 enthalten sind. Der vierte und fünfte Bereich 56, 58 beinhalten im Wesentlichen dieselben Punkte des Last-Drehzahl-Kennfeldes, jedoch für unterschiedliche Betriebszustände der Brennkraftmaschine, wie nachfolgend noch näher erläutert wird. Der Betriebszustand der Brennkraftmaschine wird neben der Drehzahl 40 und dem effektiven Motormoment 42 zusätzlich durch eine Lastanforderung bzw. eine Dynamikanforderung definiert. So kann die Brennkraftmaschine an einem Punkt des Last-Drehzahl-Kennfeldes gemäß Fig. 2 sowohl mit hohem als auch mit niedrigem Lastanforderungsgradienten oder mit konstanter Lastanforderung (stationärer Betrieb) betrieben werden. Eine Lastanforderung bzw. ein Lastanforderungsgradient ergibt sich beispielsweise aus einer Stellung eines Fahrpedals oder eines Fahrpedalgradienten eines Kraftfahrzeugs, welches mit der Brennkraftmaschine als Antriebsaggregat ausgerüstet ist.

Erfindungsgemäß ist es vorgesehen, den variablen Ventiltrieb in Abhängigkeit von dem Betriebszustand der Brennkraftmaschine zugeordnet zu den oben erläuterten Bereichen und Lastzuständen bzw. Lastanforderungszuständen bzw. Lastanforderungsgradienten auf ganz bestimmte Weise einzustellen, so dass betriebspunktabhängig verschiedene Ventilbetriebszustände eingestellt werden und sich eine bisher nicht darstellbare, zyklusgenaue Symbiose zwischen dem Brennverfahren und der Leistung bzw. Performance des Abgasturboladers ergibt. Der Ausdruck "zyklusgenau" bezieht sich hierbei auf die Arbeitszyklen in den Arbeitszylindern der Brennkraftmaschine.

Vollvariable Ventiltriebssysteme (WT) variieren neben einer großen Phasenverschiebung, den Hub bzw. die Öffnungsdauer in mehr als nur zwei diskreten Stellungen auf Ein- und Auslassseite und dies auch mit hohen Stellgeschwindigkeiten. Diese VVT-Systeme finden bei dem erfindungsgemäßen Verfahren, bei dem die jeweils optimalen Ventiltriebsparameter nicht mehr quasistationär, sondern zyklusabhängig eingestellt werden, Anwendung.

Es wird in der Motorsteuerung zwischen folgenden grundlegenden Betriebscharakteristika bzw. Betriebszuständen der Brennkraftmaschine unterschieden:
(1) hohe Dynamikanforderung (Lastanforderungsgradient) bei kleinen Motordrehzahlen
(2) hohe Dynamikanforderung (Lastanforderungsgradient) bei hohen Motordrehzahlen
(3) niedrige oder keine (=Konstantfahrt) Dynamikanforderung (Lastanforderungsgradient) in der tiefen und mittleren Teillast (drehzahlunabhängig)
(4) niedrige oder keine Dynamikanforderung (Lastanforderungsgradient) in der hohen Teillast
(5) hohe Dynamikanforderung (Lastanforderungsgradient) in der hohen Teillast
(6) Betrieb auf der maximalen Drehmomentkurve 48
(7) optional kann auch noch eine Unterscheidung zwischen tiefer und mittlerer Ausgangslast bei Punkt (1) erfolgen

Als Eingangsparameter für die Erkennung des jeweiligen Betriebszustandes der Brennkraftmaschine und zur Auslösung eines jeweiligen VVT-Betriebsbereiches bzw. Ventilbetriebszustandes werden bevorzugt ein Saugrohrdruck, eine Saugrohrtemperatur, die Motordrehzahl 40, eine aktuelle Ist-Füllung, eine Abweichung zwischen Soll- und Ist-Füllung, ein Lastanforderungsgradient, beispielsweise in Form eines Fahrpedalgradienten eines Fahrpedals eines Kraftfahrzeugs, welches mit der Brennkraftmaschine als Antriebsaggregat ausgerüstet ist, eine Volllast(VL)-Erkennung und ggf. weitere Größen herangezogen, wobei die Größen entweder direkt gemessen oder in entsprechenden Modellen berechnet werden.

Als Auslösungskriterien für die Dynamikerkennung bei den Betriebszuständen (1), (2), (5) und (7) werden bevorzugt die folgenden Größen heran gezogen: eine Schwelle für die Differenz Sollladeruck und Istladedruck bzw. Sollfüllung und Istfüllung; eine Schwelle für einen Lastanforderungsgradient, beispielsweise in Form eines Fahrpedalgradienten eines Fahrpedals eines Kraftfahrzeugs, welches mit der Brennkraftmaschine als Antriebsaggregat ausgerüstet ist; eine Schwelle für einen Motordrehzahlbereich.

Für die Erkennung des Betriebszustandes (6) und eine entsprechende Auslösung eines zugeordneten sechsten Ventilbetriebszustandes wird die VL-Erkennung und eine Schwelle für die Differenz Sollladeruck und Istladedruck bzw. Soll- und Istfüllung herangezogen. Die Unterscheidung zwischen einer hohen und einer niedrigen Dynamikanforderung erfolgt anhand einer Schwelle für den Lastanforderungsgradient, beispielsweise in Form eines Fahrpedalgradienten eines Fahrpedals eines Kraftfahrzeugs, welches mit der Brennkraftmaschine als Antriebsaggregat ausgerüstet ist, und einer Schwelle für die Differenz Sollladedruck und Istladedruck bzw. Sollfüllung und Istfüllung.

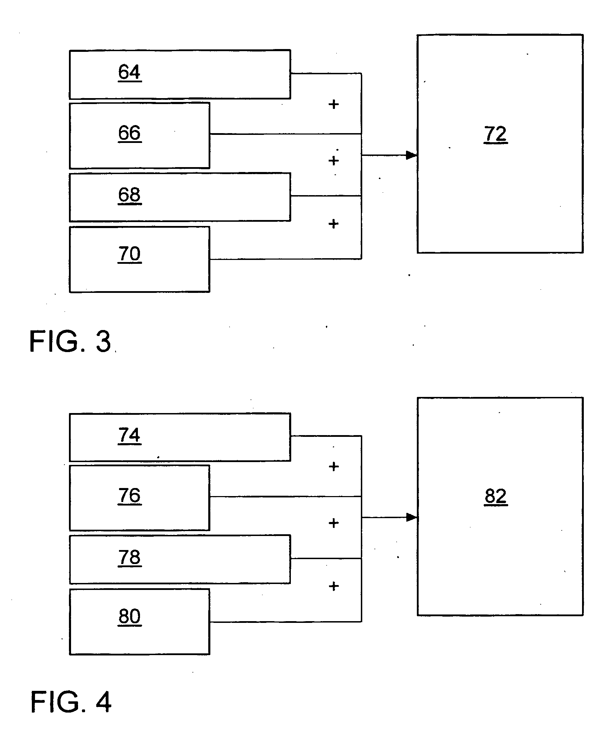

Die Kriterien für einen "Betriebsbereichsmanager", welcher erkennt, in welchem Betriebsbereich sich ein aktueller Betriebszustand der Brennkraftmaschine befindet und welcher Ventilbetriebszustand dementsprechend eingestellt wird, sind in den Fig. 3 bis 8 beispielhaft anhand von Struktogrammen dargestellt. Generell gilt, dass die dynamischen Betriebsbereiche bei entsprechend erkannter Dynamikanforderung den anderen Betriebsbereichen gegenüber priorisiert werden.

In Fig. 3 wird für eine Freischaltung eines ersten Ventilbetriebszustand für den ersten Betriebsbereich 50 in einem ersten Block 64 geprüft, ob ein Lastanforderungsgradient, beispielsweise in Form eines Fahrpedalgradienten eines Fahrpedals eines Kraftfahrzeugs, welches mit der Brennkraftmaschine als Antriebsaggregat ausgerüstet ist, größer als ein vorbestimmter Lastanforderungsgradient-Schwellwert pedgrad_schwell ist, in einem zweiten Block 66 wird geprüft, ob eine Differenz zwischen einem Sollladedruck und einem Istladedruck größer als ein vorbestimmter zweiter Schwellwert ist, in einem dritten Block 68 wird geprüft, ob eine Motordrehzahl kleiner als ein vorbestimmter Motordrehzahl-Schwellwert nmot_schwell ist und in einem vierten Block 70 wird geprüft, ob weitere relevante Fehlerbits den Wert "false" aufweisen (Error_Bits = false). Ergeben die Abfragen in allen vier Blöcken 64, 66, 68 und 70 ein positives Ergebnis (Wert "+" oder "true"), so wird in einem fünften Block 72 ein erster Ventilbetriebszustand für den ersten Betriebsbereich freigeschaltet und der variable Ventiltrieb entsprechend dem ersten Ventilbetriebszustand eingestellt.

In Fig. 4 wird für eine Freischaltung eines zweiten Ventilbetriebszustand für den zweiten Betriebsbereich 52 in einem sechsten Block 74 geprüft, ob ein Lastanforderungsgradient, beispielsweise in Form eines Fahrpedalgradienten eines Fahrpedals eines Kraftfahrzeugs, welches mit der Brennkraftmaschine als Antriebsaggregat ausgerüstet ist, größer als ein vorbestimmter Lastanforderungsgradient-Schwellwert pedgrad_schwell ist, in einem siebten Block 76 wird geprüft, ob eine Differenz zwischen einem Sollladedruck und einem Istladedruck größer als ein vorbestimmter zweiter Schwellwert ist, in einem achten Block 78 wird geprüft, ob eine Motordrehzahl größer als ein vorbestimmter Motordrehzahl-Schwellwert nmot_schwell ist und in einem neunten Block 80 wird geprüft, ob weitere relevante Fehlerbits den Wert "false" aufweisen (Error_Bits = false). Ergeben die Abfragen in allen vier Blöcken 74, 76, 78 und 80 ein positives Ergebnis (Wert "+" oder "true"), so wird in einem zehnten Block 82 ein zweiter Ventilbetriebszustand für den zweiten Betriebsbereich 52 freigeschaltet und der variable Ventiltrieb entsprechend dem ersten Ventilbetriebszustand eingestellt.

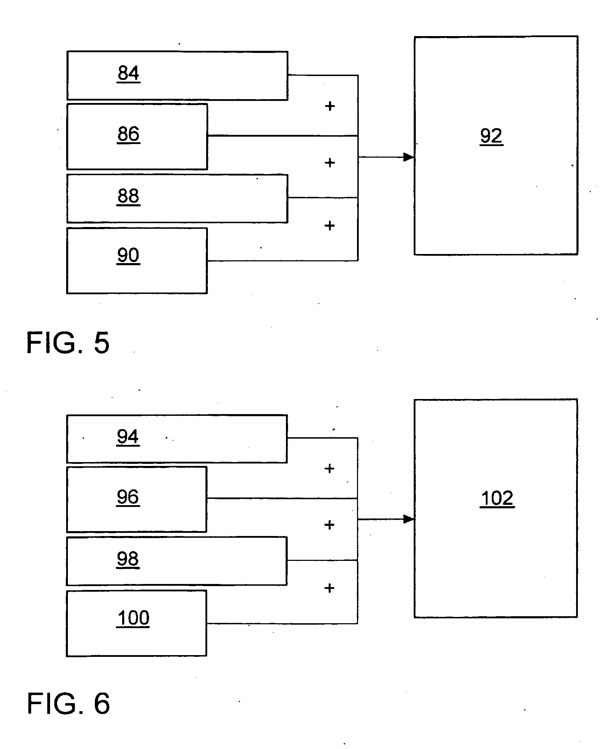

In Fig. 5 wird für eine Freischaltung eines dritten Ventilbetriebszustand für den dritten Betriebsbereich 54 in einem elften Block 84 geprüft, ob ein Lastanforderungsgradient, beispielsweise in Form eines Fahrpedalgradienten eines Fahrpedals eines Kraftfahrzeugs, welches mit der Brennkraftmaschine als Antriebsaggregat ausgerüstet ist, kleiner als ein vorbestimmter Lastanforderungsgradient-Schwellwert pedgrad_schwell ist, in einem zwölften Block 86 wird geprüft, ob eine Differenz zwischen einem Sollladedruck und einem Istladedruck größer als ein vorbestimmter erster Schwellwert ist, in einem dreizehnten Block 88 wird geprüft, ob eine Lastgröße kleiner als ein vorbestimmter Last-Schwellwert last_schwell 46 ist und in einem vierzehnten Block 90 wird geprüft, ob weitere relevante Fehlerbits den Wert "false" aufweisen (Error_Bits = false). Ergeben die Abfragen in allen vier Blöcken 84, 86, 88 und 90 ein positives Ergebnis (Wert "+" oder "true"), so wird in einem fünfzehnten Block 92 ein dritter Ventilbetriebszustand für den dritten Betriebsbereich 54 freigeschaltet und der variable Ventiltrieb entsprechend dem ersten Ventilbetriebszustand eingestellt.

In Fig. 6 wird für eine Freischaltung eines vierten Ventilbetriebszustand für den vierten Betriebsbereich 56 in einem sechzehnten Block 94 geprüft, ob ein Lastanforderungsgradient, beispielsweise in Form eines Fahrpedalgradienten eines Fahrpedals eines Kraftfahrzeugs, welches mit der Brennkraftmaschine als Antriebsaggregat ausgerüstet ist, kleiner als ein vorbestimmter Lastanforderungsgradient-Schwellwert pedgrad_schwell ist, in einem siebzehnten Block 96 wird geprüft, ob eine Differenz zwischen einem Sollladedruck und einem Istladedruck größer als ein vorbestimmter zweiter Schwellwert ist, in einem achtzehnten Block 98 wird geprüft, ob eine Lastgröße größer als ein vorbestimmter Last-Schwellwert last_schwell 46 ist und in einem neunzehnten Block 100 wird geprüft, ob weitere relevante Fehlerbits den Wert "false" aufweisen (Error_Bits = false). Ergeben die Abfragen in allen vier Blöcken 94, 96, 98 und 100 ein positives Ergebnis (Wert "+" oder "true"), so wird in einem zwanzigsten Block 102 ein vierter Ventilbetriebszustand für den vierten Betriebsbereich 56 freigeschaltet und der variable Ventiltrieb entsprechend dem ersten Ventilbetriebszustand eingestellt.

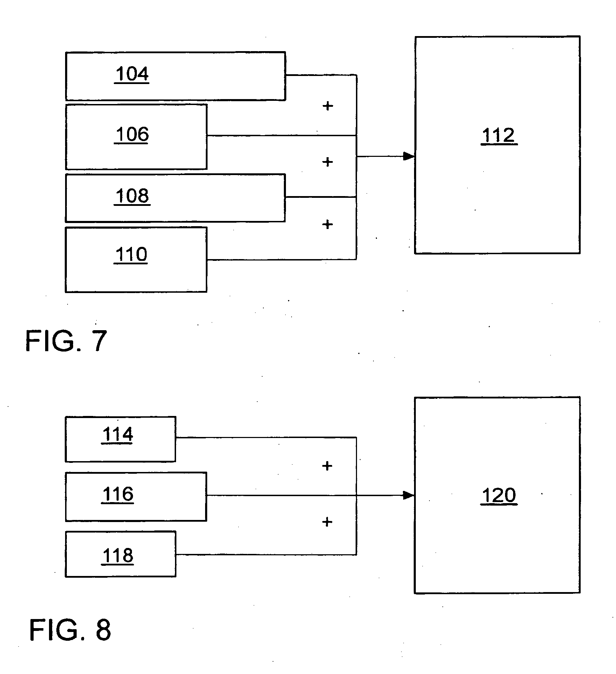

In Fig. 7 wird für eine Freischaltung eines fünften Ventilbetriebszustand für den fünften Betriebsbereich 58 in einem einundzwanzigsten Block 104 geprüft, ob ein Lastanforderungsgradient, beispielsweise in Form eines Fahrpedalgradienten eines Fahrpedals eines Kraftfahrzeugs, welches mit der Brennkraftmaschine als Antriebsaggregat ausgerüstet ist, größer als ein vorbestimmter Lastanforderungsgradient-Schwellwert pedgrad_schwell ist, in einem zweiundzwanzigsten Block 106 wird geprüft, ob eine Differenz zwischen einem Sollladedruck und einem Istladedruck größer als ein vorbestimmter zweiter Schwellwert ist, in einem dreiundzwanzigsten Block 108 wird geprüft, ob eine Lastgröße größer als ein vorbestimmter Last-Schwellwert last_schwell 46 ist und in einem vierundzwanzigsten Block 110 wird geprüft, ob weitere relevante Fehlerbits den Wert "false" aufweisen (Error_Bits = false). Ergeben die Abfragen in allen vier Blöcken 104, 106, 108 und 110 ein positives Ergebnis (Wert "+" oder "true"), so wird in einem fünfundzwanzigsten Block 112 ein fünfter Ventilbetriebszustand für den fünften Betriebsbereich 58 freigeschaltet und der variable Ventiltrieb entsprechend dem ersten Ventilbetriebszustand eingestellt.

In Fig. 8 wird für eine Freischaltung eines sechsten Ventilbetriebszustand für den sechsten Betriebsbereich 60 in einem sechsundzwanzigsten Block 114 geprüft, ob ein das Bit_VL aktiv ist, d.h. ob ein Volllastzustand mit maximalen Drehmoment für die momentane Motordrehzahl vorliegt bzw. ob sich der Betriebszustand der Brennkraftmaschine in dem Last-Drehzahl-Kennfeld auf der Funktion 48 befindet, in einem siebenundzwanzigsten Block 116 wird geprüft, ob eine Differenz zwischen einem Sollladedruck und einem Istladedruck kleiner als ein vorbestimmter erster Schwellwert ist und in einem achtundzwanzigsten Block 118 wird geprüft, ob weitere relevante Fehlerbits den Wert "false" aufweisen (Error_Bits = false). Ergeben die Abfragen in allen drei Blöcken 114, 116 und 118 ein positives Ergebnis (Wert "+" oder "true"), so wird in einem neunundzwanzigsten Block 120 ein sechster Ventilbetriebszustand für den sechsten Betriebsbereich 60 freigeschaltet und der variable Ventiltrieb entsprechend dem ersten Ventilbetriebszustand eingestellt.

Für die zuvor erläuterten Struktogramme gilt, dass der erste Schwellwert kleiner als der zweite Schwellwert ist. Für den Motordrehzahl-Schwellwert nmot_schwell wird beispielsweise ein Wert von 2.000 1/min, insbesondere 2.500 1/min, 3.500 1/min oder 4.500 1/min, gewählt.

Für die unterschiedlichen Betriebsbereiche 50, 52, 54, 58 und 60 sind folgende Ventiltriebszustände vorgesehen:
Für den ersten Ventilbetriebszustand werden die Ventilereignisse auslassseitig derart auf kurze Steuerzeiten eingestellt, dass ein abgasseitiges Übersprechen zwischen den beiden in der Zündfolge aufeinander folgenden Arbeitszylindern vermieden wird. Beispielsweise bei einem R4-Motor werden die Ventilöffnungszeiten der Auslassventile auf 170°-180°KW, bis max. 185°KW eingestellt. Die Einlassventile arbeiten in den ersten Zyklen nach der Lastanforderung in Abhängigkeit vom Kolbenhub füllungserhöhend. Spätestens bei Erreichen des Zielmomentes wird in einen anderen Betriebsbereich bzw. Ventilbetriebszustand, beispielsweise den vierten Ventilbetriebszustand für den vierten Bereich 56 oder den sechsten Ventilbetriebszustand für den sechsten Bereich 60, gewechselt.

Im zweiten Betriebsbereich 52 ist bei hohen Motordrehzahlen das Ansprechverhalten des Abgasturboladers (ATL) in der Regel sehr gut. Eine Füllung erhöhende Unterstützung seitens des Ventiltriebes ist nicht notwendig. Die Ansteuerung der Einlassventile (EV) und Auslassventile (AV) erfolgt mit einem/einer der Motor-/ATL-Kombination hinsichtlich des Kraftstoffverbrauchs optimalen Hub und Überschneidung. Eine zyklusgebundene Ansteuerung der Ventile ist in diesem Betriebsbereich nicht vorgesehen. Die Abgrenzung zwischen dem ersten Betriebsbereichen 50 und dem zweiten Betriebsbereich 52 liegt beispielsweise zwischen einer Motordrehzahl 40 von 2.000 1/min und 3.500 1/min. Der zweite Betriebsbereich 52 beginnt aber spätestens oberhalb von 4.500 1/min.

In dem dritten Betriebsbereich 54 erfolgt ebenfalls keine zyklusgeregelte Ventilansteuerung. Hier werden die für den Verbrauch der jeweiligen Motor-/ATL-Kombination optimalen EV-/AV-Hübe und Phasenüberschneidungen eingestellt.

In dem vierten Betriebsbereich 56 entspricht die Ansteuer-/Regelstrategie für den VVT der für den zweiten Betriebsbereich 52 beschriebenen Strategie. Die Abgrenzung zu dem dritten Bereich 54 erfolgt hier allerdings nicht anhand der Motordrehzahl 40, sondern anhand der vor der Dynamikanforderung anliegenden Last. Diese Abgrenzung liegt idealerweise in einem Bereich zwischen 40 bis 80% des maximalen Momentes (bzw. der maximalen Luftmasse/Füllung) bei der jeweiligen Motordrehzahl. Die verbrauchsoptimalen Parameter für den VVT werden in diesem Betriebsbereich nicht aufgegeben. Optional werden in diesem vierten Betriebsbereich 56 auch schon die Ventiltriebsstrategien, wie sie nachfolgend für den sechsten Betriebsbereich 60 beschrieben werten, angewandt.

Die Voraussetzung für den fünften Betriebsbereich 58 ist aufgrund der Funktionslogik immer eine verbrauchsoptimale Einstellung des VVT. Bei Erkennung einer hohen Dynamikanforderung wird auf eine größere Überschneidung gewechselt, um den Hochlauf des ATL zu begünstigen. Abhängig von der Motor-/ATL-Kombination erfolgt die Vergrößerung der Überschneidung unmittelbar zum ersten Zyklus nach der Dynamikerkennung oder um einige Zyklen verzögert. Bei einer Verzögerung werden idealerweise Verzögerungszeiten von 1 bis 10 Zyklen eingestellt.

Bei Betrieb auf der maximalen Drehmomentkurve des Motors, d.h. im sechsten Betriebsbereich 60, werden die EV in einem an dem Stand der Technik bekannten Expansionsmodus betrieben. Optional wird in diesem sechsten Bereich 60 auch eine Ladungswechselstrategie angewandt, die als Miller-/Atkinsonverfahren bekannt ist.

Wird auch bei kleinen Motordrehzahlen 40 zwischen einer hohen und tiefen Ausgangslast bei Erkennung einer Dynamikanforderung unterschieden, wird bei tiefen Ausgangslasten der VVT entsprechend dem ersten Betriebsbereich 50 gesteuert/geregelt und bei hohen Ausgangslasten wird der VVT entsprechend der/dem für den fünften Betriebsbereich 58 beschriebenen VVT-Strategie bzw. Ventilbetriebszustand betrieben.

## Patentansprüche

1. Verfahren zum Betreiben einer Brennkraftmaschine, insbesondere eines Kraftfahrzeugs, wobei in Abhängigkeit von einem Betriebszustand der Brennkraftmaschine ein hinsichtlich Ventilsteuerzeiten und/oder Ventilhub variabler Ventilantrieb für mindestens ein Einlassventil und mindestens ein Auslassventil mindestens eines Arbeitszylinders der Brennkraftmaschine angesteuert wird und wobei eine Verbrennungsluft von einem Abgasturbolader vorverdichtet wird, **dadurch gekennzeichnet,**
**dass** in einem ersten Betriebszustand der Brennkraftmaschine mit hoher Lastanforderung und kleiner Drehzahl ein erster Ventilbetriebszustand des variablen Ventiltriebs eingestellt wird, wobei in dem ersten Ventilbetriebszustand mindestens ein Einlassventil derart eingestellt wird, dass sich eine Erhöhung der Füllung des diesem Einlassventil zugeordneten Arbeitszylinders ergibt;
**dass** in einem zweiten Betriebszustand der Brennkraftmaschine mit hoher Lastanforderung und hoher Drehzahl ein zweiter Ventilbetriebszustand des variablen Ventiltriebs eingestellt wird, wobei in dem zweiten Ventilbetriebszustand mindestens ein Einlassventil und mindestens ein Auslassventil mindestens eines Arbeitszylinders derart eingestellt werden, dass sich eine Überschneidung der Öffnungszeiten dieses Einlassventils und Auslassventils sowie ein minimierter Kraftstoffverbrauch ergibt;
**dass** in einem dritten Betriebszustand der Brennkraftmaschine mit keiner oder geringer Lastanforderung unterhalb eines vorbestimmten Schwellwertes und bei niedriger bis mittlerer Teillast ein dritter Ventilbetriebszustand des variablen Ventiltriebs eingestellt wird, wobei in dem dritten Ventilbetriebszustand mindestens ein Einlassventil und mindestens ein Auslassventil mindestens eines Arbeitszylinders derart eingestellt werden, dass sich eine Überschneidung der Öffnungszeiten dieses Einlassventils und Auslassventils sowie ein minimierter Kraftstoffverbrauch ergibt;
**dass** in einem vierten Betriebszustand der Brennkraftmaschine mit keiner oder geringer Lastanforderung unterhalb eines vorbestimmten Schwellwertes und bei hoher Teillast ein vierter Ventilbetriebszustand des variablen Ventiltriebs eingestellt wird, wobei in dem vierten Ventilbetriebszustand mindestens ein Einlassventil und mindestens ein Auslassventil mindestens eines Arbeitszylinders derart eingestellt werden, dass sich eine Überschneidung der Öffnungszeiten dieses Einlassventils und Auslassventils sowie ein minimierter Kraftstoffverbrauch ergibt;
**dass** in einem fünften Betriebszustand der Brennkraftmaschine mit hoher Lastanforderung oberhalb eines vorbestimmten Schwellwertes und bei hoher Teillast ein fünfter Ventilbetriebszustand des variablen Ventiltriebs eingestellt wird, wobei in dem fünften Ventilbetriebszustand mindestens ein Einlassventil und mindestens ein Auslassventil mindestens eines Arbeitszylinders derart eingestellt werden, dass eine zeitliche Überschneidung der Öffnungszeiten dieses Einlassventils und Auslassventils größer ist als bei einer Einstellung mit minimiertem Kraftstoffverbrauch; und
**dass** in einem sechsten Betriebszustand der Brennkraftmaschine mit maximalem Drehmoment ein sechster Ventilbetriebszustand des variablen Ventiltriebs eingestellt wird, wobei in dem sechsten Ventilbetriebszustand mindestens ein Einlassventil in einem Expansionsmodus oder gemäß einem Miller-/Atkinsonverfahren betrieben wird.

2. Verfahren nach Anspruch 1, **dadurch gekennzeichnet, dass** der erste Ventilbetriebszustand des variablen Ventiltriebs eingestellt wird, wenn sich der erste Betriebszustand in einem ersten Bereich in einem Last-Drehzahl-Kennfeld der Brennkraftmaschine befindet, welcher durch eine Drehzahl von 1.000 1/min bis 2.000 1/min, insbesondere bis 2.500 1/min, 3.500 1/min oder 4.500 1/min, ein effektives Motormoment von 0 und eine Funktion des maximal von der Brennkraftmaschine abgegebenen Drehmomentes in Abhängigkeit von der Drehzahl begrenzt ist.

3. Verfahren nach mindestens einem der vorhergehenden Ansprüche, **dadurch gekennzeichnet, dass** der erste Ventilbetriebszustand beendet wird, wenn das von der Brennkraftmaschine abgegebene Drehmoment ein vorbestimmtes Drehmoment, insbesondere das angeforderte Drehmoment, erreicht hat.

4. Verfahren nach mindestens einem der vorhergehenden Ansprüche, **dadurch gekennzeichnet, dass** der zweite Ventilbetriebszustand des variablen Ventiltriebs eingestellt wird, wenn sich der zweite Betriebszustand in einem zweiten Bereich in einem Last-Drehzahl-Kennfeld der Brennkraftmaschine befindet, welcher durch eine Drehzahl von 2.000 1/min, insbesondere von 2.500 1/min, 3.500 1/min oder 4.500 1/min, bis zur maximalen Drehzahl der Brennkraftmaschine, ein effektives Motormoment von 0 und eine Funktion des maximal von der Brennkraftmaschine abgegebenen Drehmomentes in Abhängigkeit von der Drehzahl begrenzt ist.

5. Verfahren nach mindestens einem der vorhergehenden Ansprüche, **dadurch gekennzeichnet, dass** der dritte Ventilbetriebszustand des variablen Ventiltriebs eingestellt wird, wenn sich der dritte Betriebszustand in einem dritten Bereich in einem Last-Drehzahl-Kennfeld der Brennkraftmaschine befindet, welcher durch eine Drehzahl von 1.000 1/min bis zur maximalen Drehzahl der Brennkraftmaschine, ein effektives Motormoment von 0 und ein effektives Motormoment von 40 % bis 80% des maximal von der. Brennkraftmaschine abgegebenen Drehmomentes begrenzt ist.

6. Verfahren nach mindestens einem der vorhergehenden Ansprüche, **dadurch gekennzeichnet, dass** der vierte Ventilbetriebszustand des variablen Ventiltriebs eingestellt wird, wenn sich der vierte Betriebszustand in einem vierten Bereich in einem Last-Drehzahl-Kennfeld der Brennkraftmaschine befindet, welcher durch eine Drehzahl von 1.000 1/min bis zur maximalen Drehzahl der Brennkraftmaschine, ein effektives Motormoment von 40 % bis 80% des maximal von der Brennkraftmaschine abgegebenen Drehmomentes und eine Funktion des maximal von der Brennkraftmaschine abgegebenen Drehmomentes in Abhängigkeit von der Drehzahl begrenzt ist.

7. Verfahren nach mindestens einem der vorhergehenden Ansprüche, **dadurch gekennzeichnet, dass** der fünfte Ventilbetriebszustand des variablen Ventiltriebs eingestellt wird, wenn sich der fünfte Betriebszustand in einem fünften Bereich in einem Last-Drehzahl-Kennfeld der Brennkraftmaschine befindet, welcher durch eine Drehzahl von 1.000 1/min bis zur maximalen Drehzahl der Brennkraftmaschine, ein effektives Motormoment von 40 % bis 80% des maximal von der Brennkraftmaschine abgegebenen Drehmomentes und eine Funktion des maximal von der Brennkraftmaschine abgegebenen Drehmomentes in Abhängigkeit von der Drehzahl begrenzt ist.

8. Verfahren nach mindestens einem der vorhergehenden Ansprüche, **dadurch gekennzeichnet, dass** der fünfte Ventilbetriebszustand des variablen Ventiltriebs um eine vorbestimmte Anzahl von Zyklen in dem Arbeitszylinder verzögert eingestellt wird, wobei die vorbestimmte Anzahl von Zyklen 1 bis 10 Zyklen beträgt.

9. Verfahren nach mindestens einem der vorhergehenden Ansprüche, **dadurch gekennzeichnet, dass** der sechste Ventilbetriebszustand des variablen Ventiltriebs eingestellt wird, wenn sich der sechste Betriebszustand in einem sechsten Bereich in einem Last-Drehzahl-Kennfeld der Brennkraftmaschine befindet, welcher durch eine Funktion des maximal von der Brennkraftmaschine abgegebenen Drehmomentes in Abhängigkeit von der Drehzahl bestimmt ist.

10. Verfahren nach Anspruch 2 und mindestens einem der Ansprüche 3 bis 9, **dadurch gekennzeichnet, dass** in dem ersten Betriebszustand anstatt dem ersten Ventilbetriebszustand der fünfte Ventilbetriebszustand des variablen Ventiltriebs eingestellt wird, wenn sich der erste Betriebszustand in einem siebten Bereich innerhalb des ersten Bereiches in einem Last-Drehzahl-Kennfeld der Brennkraftmaschine befindet, welcher innerhalb des ersten Bereiches durch eine Funktion des maximal von der Brennkraftmaschine abgegebenen Drehmomentes in Abhängigkeit von der Drehzahl und ein effektives Motormoment von 40 % bis 80% des maximal von der Brennkraftmaschine abgegebenen Drehmomentes begrenzt ist.

11. Verfahren nach mindestens einem der vorhergehenden Ansprüche, **dadurch gekennzeichnet, dass** als Eingangsparameter zur Erkennung des jeweiligen Betriebszustandes der Brennkraftmaschine ein Saugrohrdruck, eine Saugrohrtemperatur, eine Motordrehzahl, eine aktuelle Ist-Füllung, eine Abweichung zwischen Soll- und Ist-Füllung, ein Lastanforderungsgradient, beispielsweise in Form eines Fahrpedalgradienten eines Fahrpedals eines Kraftfahrzeugs, in dem die Brennkraftmaschine angeordnet ist, und/oder eine Volllast(VL)-Erkennung und/oder ggf. weitere Betriebsparameter der Brennkraftmaschine verwendet werden, wobei die Größen entweder direkt gemessen oder in entsprechenden Modellen berechnet werden.

12. Verfahren nach mindestens einem der vorhergehenden Ansprüche, **dadurch gekennzeichnet, dass** zur Erkennung der Bedingung für die Lastanforderung ein Schwellwert für eine Differenz zwischen einem Sollladedruck und einem Istladedruck, ein Schwellwert für eine Differenz zwischen einer Sollfüllung und einer Istfüllung und/oder ein Schwellwert für einen Lastanforderungsgradienten, beispielsweise in Form eines Fahrpedalgradienten eines Fahrpedals eines Kraftfahrzeugs, in dem die Brennkraftmaschine angeordnet ist, und für die Erkennung der Bedingung für die Motordrehzahl ein Schwellwert für einen Motordrehzahlbereich verwendet wird.

13. Verfahren nach mindestens einem der vorhergehenden Ansprüche, **dadurch gekennzeichnet, dass** zur Erkennung der Bedingungen für den sechsten Betriebszustand eine Volllasterkennung und ein Schwellwert für die Differenz zwischen einem Sollladedruck und einem Istladedruck und/oder ein Schwellwert für die Differenz zwischen einer Sollfüllung und einer Istfüllung verwendet wird.

14. Verfahren nach mindestens einem der vorhergehenden Ansprüche, **dadurch gekennzeichnet, dass** von dem ersten Ventilbetriebszustand in den vierten oder sechsten Ventilbetriebszustand gewechselt wird, wenn das von der Brennkraftmaschine abgegebene Drehmoment ein vorbestimmtes Drehmoment, insbesondere das angeforderte Drehmoment, erreicht hat.

15. Verfahren nach mindestens einem der vorhergehenden Ansprüche, **dadurch gekennzeichnet, dass** in dem ersten Ventilbetriebszustand mindestens ein Auslassventil auf eine kurze Öffnungsdauer von 170° KW bis 185° KW, insbesondere 170° KW bis 180° KW, eingestellt wird.

## Claims

1. Method for operating an internal combustion engine, in particular of a motor vehicle, wherein a valve operating mechanism, which is variable in terms of valve control times and/or valve stroke, for at least one inlet valve and at least one outlet valve of at least one working cylinder of the internal combustion engine is actuated in dependence on an operating state of the internal combustion engine, and wherein combustion air is precompressed by an exhaust gas turbocharger, **characterized in that** in a first operating state of the internal combustion engine with a high load request and a low rotational speed a first valve operating state of the variable valve operating mechanism is set, wherein in the first valve operating state at least one inlet valve is set in such a way that the charge of the working cylinder which is assigned to this inlet valve is increased;
**in that** in a second operating state of the internal combustion engine with a high load request and a high rotational speed a second valve operating state of the variable valve operating mechanism is set, wherein in the second valve operating state at least one inlet valve and at least one outlet valve of at least one working cylinder are set in such a way that an overlap of the opening times of this inlet valve and outlet valve as well as a minimized fuel consumption occur;
**in that** in a third operating state of the internal combustion engine with no or a low load request below a predetermined threshold value and in the case of a low to medium partial load a third valve operating state of the variable valve operating mechanism is set, wherein in the third valve operating state at least one inlet valve and at least one outlet valve of at least one working cylinder are set in such a way that an overlap of the opening times of this inlet valve and outlet valve and a minimized fuel consumption occur;
**in that** in a fourth operating state of the internal combustion engine with no or a low load request below a predetermined threshold value and in the case of a high partial load a fourth valve operating state of the variable valve operating mechanism is set, wherein in the fourth valve operating state at least one inlet valve and at least one outlet valve of at least one working cylinder are set in such a way that an overlap of the opening times of this inlet valve and outlet valve and a minimized fuel consumption occur;
**in that** in a fifth operating state of the internal combustion engine with a high load request above a predetermined threshold value and in the case of a high partial load a fifth valve operating state of the variable valve operating mechanism is set, wherein in the fifth valve operating state at least one inlet valve and at least one outlet valve of at least one working cylinder are set in such a way that a chronological overlap of the opening times of this inlet valve and outlet valve is larger than in the case of a setting with a minimized fuel consumption; and
**in that** in a sixth operating state of the internal combustion engine with a maximum torque a sixth valve operating state of the variable valve operating mechanism is set, wherein in the sixth valve operating state at least one inlet valve is operated in an expansion mode or according to a Miller/Atkinson method.

2. Method according to Claim 1, **characterized in that** the first valve operating state of the variable valve operating mechanism is set when the first operating state is in a first range in a load/rotational speed characteristic diagram of the internal combustion engine which is bounded by a rotational speed of 1000 1/min to 2000 1/min, in particular up to 2500 1/min, 3500 1/min or 4500 1/min, an effective engine torque of 0 and a function of the maximum torque which is output by the internal combustion engine in dependence on the rotational speed.

3. Method according to at least one of the preceding claims, **characterized in that** the first valve operating state is ended when the torque which is output by the internal combustion engine has reached a predetermined torque, in particular the required torque.

4. Method according to at least one of the preceding claims, **characterized in that** the second valve operating state of the variable valve operating mechanism is set when the second operating state is in a second range in a load/rotational speed characteristic diagram of the internal combustion engine which is bounded by a rotational speed of 2000 1/min, in particular of 2500 1/min, 3500 1/min or 4500 1/min, up to the maximum rotational speed of the internal combustion engine, an effective engine torque of 0 and a function of the maximum torque which is output by the internal combustion engine in dependence on the rotational speed.

5. Method according to at least one of the preceding claims, **characterized in that** the third valve operating state of the variable valve operating mechanism is set when the third operating state is in a third range in a load/rotational speed characteristic diagram of the internal combustion engine which is bounded by a rotational speed of 1000 1/min up to the maximum rotational speed of the internal combustion engine, an effective engine torque of 0 and an effective engine torque of 40% to 80% of the maximum torque which is output by the internal combustion engine.

6. Method according to at least one of the preceding claims, **characterized in that** the fourth valve operating state of the variable valve operating mechanism is set when the fourth operating state is in a fourth range in a load/rotational speed characteristic diagram of the internal combustion engine which is bounded by a rotational speed of 1000 1/min up to the maximum rotational speed of the internal combustion engine, an effective engine torque of 40% to 80% of the maximum torque which is output by the internal combustion engine and a function of the maximum torque which is output by the internal combustion engine in dependence on the rotational speed.

7. Method according to at least one of the preceding claims, **characterized in that** the fifth valve operating state of the variable valve operating mechanism is set when the fifth operating state is in a fifth range in a load/rotational speed characteristic diagram of the internal combustion engine which is bounded by a rotational speed of 1000 1/min up to the maximum rotational speed of the internal combustion engine, an effective engine torque of 40% to 80% of the maximum torque which is output by the internal combustion engine and a function of the maximum torque which is output by the internal combustion engine in dependence on the rotational speed.

8. Method according to at least one of the preceding claims, **characterized in that** the fifth valve operating state of the variable valve operating mechanism is set delayed by a predetermined number of cycles in the working cylinder, wherein the predetermined number of cycles is 1 to 10 cycles.

9. Method according to at least one of the preceding claims, **characterized in that** the sixth valve operating state of the variable valve operating mechanism is set when the sixth operating state is in a sixth range in a load/rotational speed characteristic diagram of the internal combustion engine which is bounded by a function of the maximum torque which is output by the internal combustion engine in dependence on the rotational speed.

10. Method according to Claim 2 and at least one of Claims 3 to 9, **characterized in that** in the first operating state the fifth valve operating state of the variable valve operating mechanism is set instead of the first valve operating state if the first operating state is in a seventh range within the first range in a load/rotational speed characteristic diagram of the internal combustion engine which is bounded within the first range by a function of the maximum torque which is output by the internal combustion engine in dependence on the rotational speed and an effective engine torque of 40% to 80% of the maximum torque which is output by the internal combustion engine.

11. Method according to at least one of the preceding claims, **characterized in that** an intake manifold pressure, an intake manifold temperature, an engine rotational speed, a current actual charge, a deviation between the setpoint charge and actual charge, a load request gradient, for example in the form of an accelerator pedal gradient of an accelerator pedal of a motor vehicle in which the internal combustion engine is arranged and/or a full load (FL) detection and/or, if appropriate, further operating parameters of the internal combustion engine are used as input parameters for the detection of the respective operating state of the internal combustion engine, wherein the variables are either measured directly or calculated in corresponding models.

12. Method according to at least one of the preceding claims, **characterized in that** a threshold value for a difference between a setpoint charge pressure and an actual charge pressure, a threshold value for a difference between a setpoint charge and an actual charge and/or a threshold value for a load request gradient, for example in the form of an accelerator pedal gradient of an accelerator pedal of a motor vehicle in which the internal combustion engine is arranged are used for the detection of the condition for the load request, and a threshold value for an engine rotational speed range is used for the detection of the condition for the engine rotational speed.

13. Method according to at least one of the preceding claims, **characterized in that** a full load detection and a threshold value for the difference between a setpoint charge pressure and an actual charge pressure and/or a threshold value for the difference between a setpoint charge and an actual charge are used for the detection -of-the conditions for the sixth operating state.

14. Method according to at least one of the preceding claims, **characterized in that** a changeover is performed from the first valve operating state into the fourth or sixth valve operating state if the torque which is output by the internal combustion engine has reached a predetermined torque, in particular the requested torque.

15. Method according to at least one of the preceding claims, **characterized in that** in the first valve operating state at least one outlet valve is set to a short operating period of 170° CA to 185° CA, in particular 170° CA to 180° CA.

## Revendications

1. Procédé pour faire fonctionner un moteur à combustion interne, notamment d'un véhicule automobile, un mécanisme d'entraînement de soupape variable du point de vue des temps de commande de soupape et/ou de la course de soupape pour au moins une soupape d'admission et au moins une soupape d'échappement d'au moins un cylindre de travail du moteur à combustion interne étant commandé en fonction d'un état opérationnel du moteur à combustion interne et de l'air de combustion étant précomprimé par un turbocompresseur des gaz d'échappement, **caractérisé en ce que** dans un premier état opérationnel du moteur à combustion interne avec une demande de charge élevée et une petite vitesse de rotation, un premier état opérationnel de soupape du mécanisme d'entraînement de soupape variable est réglé, au moins une soupape d'admission étant réglée dans le premier état opérationnel de soupape de telle sorte qu'il se produit une augmentation du remplissage du cylindre de travail associé à cette soupape d'admission ;
que dans un deuxième état opérationnel du moteur à combustion interne avec une demande de charge élevée et une grande vitesse de rotation, un deuxième état opérationnel de soupape du mécanisme d'entraînement de soupape variable est réglé, au moins une soupape d'admission et au moins une soupape d'échappement d'au moins un cylindre de travail étant réglées dans le deuxième état opérationnel de soupape de telle sorte qu'il se produit un chevauchement des temps d'ouverture de cette soupape d'admission et de cette soupape d'échappement ainsi qu'une consommation de carburant minimisée ;
que dans un troisième état opérationnel du moteur à combustion interne avec une demande de charge nulle ou faible au-dessous d'une valeur de seuil prédéfinie et avec une charge partielle faible à moyenne, un troisième état opérationnel de soupape du mécanisme d'entraînement de soupape variable est réglé, au moins une soupape d'admission et au moins une soupape d'échappement d'au moins un cylindre de travail étant réglées dans le troisième état opérationnel de soupape de telle sorte qu'il se produit un chevauchement des temps d'ouverture de cette soupape d'admission et de cette soupape d'échappement ainsi qu'une consommation de carburant minimisée ;
que dans un quatrième état opérationnel du moteur à combustion interne avec une demande de charge nulle ou faible au-dessous d'une valeur de seuil prédéfinie et avec une charge partielle élevée, un quatrième état opérationnel de soupape du mécanisme d'entraînement de soupape variable est réglé, au moins une soupape d'admission et au moins une soupape d'échappement d'au moins un cylindre de travail étant réglées dans le quatrième état opérationnel de soupape de telle sorte qu'il se produit un chevauchement des temps d'ouverture de cette soupape d'admission et de cette soupape d'échappement ainsi qu'une consommation de carburant minimisée ;
que dans un cinquième état opérationnel du moteur à combustion interne avec une demande de charge élevée au-dessus d'une valeur de seuil prédéfinie et avec une charge partielle élevée, un cinquième état opérationnel de soupape du mécanisme d'entraînement de soupape variable est réglé, au moins une soupape d'admission et au moins une soupape d'échappement d'au moins un cylindre de travail étant réglées dans le cinquième état opérationnel de soupape de telle sorte qu'un chevauchement temporel des temps d'ouverture de cette soupape d'admission et de cette soupape d'échappement est supérieur à celui lors d'un réglage avec une consommation de carburant minimisée ; et
que dans un sixième état opérationnel du moteur à combustion interne avec un couple maximum, un sixième état opérationnel de soupape du mécanisme d'entraînement de soupape variable est réglé, au moins une soupape d'admission, dans le sixième état opérationnel de soupape, fonctionnant dans un mode d'expansion ou conformément à un procédé de Miller/d'Atkinson.

2. Procédé selon la revendication 1, **caractérisé en ce que** le premier état opérationnel de soupape du mécanisme d'entraînement de soupape variable est réglé lorsque le premier état opérationnel se trouve dans une première plage dans un diagramme caractéristique charge/vitesse de rotation du moteur à combustion interne, laquelle est délimitée par une vitesse de rotation de 1000 t/min à 2000 t/min, notamment jusqu'à 2500 t/min, 3500 t/min ou 4500 t/min, un couple moteur effectif de 0 et une fonction du couple maximum délivré par le moteur à combustion interne en fonction de la vitesse de rotation.

3. Procédé selon au moins l'une des revendications précédentes, **caractérisé en ce que** le premier état opérationnel de soupape prend fin lorsque le couple délivré par le moteur à combustion interne a atteint un couple prédéterminé, notamment le couple exigé.

4. Procédé selon au moins l'une des revendications précédentes, **caractérisé en ce que** le deuxième état opérationnel de soupape du mécanisme d'entraînement de soupape variable est réglé lorsque le deuxième état opérationnel se trouve dans une deuxième plage dans un diagramme caractéristique charge/vitesse de rotation du moteur à combustion interne, laquelle est délimitée par une vitesse de rotation de 2000 t/min, notamment de 2500 t/min, 3500 t/min ou 4500 t/min jusqu'à la vitesse de rotation maximale du moteur à combustion interne, un couple moteur effectif de 0 et une fonction du couple maximum délivré par le moteur à combustion interne en fonction de la vitesse de rotation.

5. Procédé selon au moins l'une des revendications précédentes, **caractérisé en ce que** le troisième état opérationnel de soupape du mécanisme d'entraînement de soupape variable est réglé lorsque le troisième état opérationnel se trouve dans une troisième plage dans un diagramme caractéristique charge/vitesse de rotation du moteur à combustion interne, laquelle est délimitée par une vitesse de rotation de 1000 t/min jusqu'à la vitesse de rotation maximale du moteur à combustion interne, un couple moteur effectif de 0 et un couple moteur effectif de 40 % à 80 % du couple maximum délivré par le moteur à combustion interne.

6. Procédé selon au moins l'une des revendications précédentes, **caractérisé en ce que** le quatrième état opérationnel de soupape du mécanisme d'entraînement de soupape variable est réglé lorsque le quatrième état opérationnel se trouve dans une quatrième plage dans un diagramme caractéristique charge/vitesse de rotation du moteur à combustion interne, laquelle est délimitée par une vitesse de rotation de 1000 t/min jusqu'à la vitesse de rotation maximale du moteur à combustion interne, un couple moteur effectif de 40 % à 80 % du couple maximum délivré par le moteur à combustion interne et une fonction du couple maximum délivré par le moteur à combustion interne en fonction de la vitesse de rotation.

7. Procédé selon au moins l'une des revendications précédentes, **caractérisé en ce que** le cinquième état opérationnel de soupape du mécanisme d'entraînement de soupape variable est réglé lorsque le cinquième état opérationnel se trouve dans une cinquième plage dans un diagramme caractéristique charge/vitesse de rotation du moteur à combustion interne, laquelle est délimitée par une vitesse de rotation de 1000 t/min jusqu'à la vitesse de rotation maximale du moteur à combustion interne, un couple moteur effectif de 40 % à 80 % du couple maximum délivré par le moteur à combustion interne et une fonction du couple maximum délivré par le moteur à combustion interne en fonction de la vitesse de rotation.

8. Procédé selon au moins l'une des revendications précédentes, **caractérisé en ce que** le cinquième état opérationnel de soupape du mécanisme d'entraînement de soupape variable est réglé retardé d'un nombre prédéfini de cycles dans le cylindre de travail, le nombre prédéfini de cycles étant de 1 à 10 cycles.

9. Procédé selon au moins l'une des revendications précédentes, **caractérisé en ce que** le sixième état opérationnel de soupape du mécanisme d'entraînement de soupape variable est réglé lorsque le sixième état opérationnel se trouve dans une sixième plage dans un diagramme caractéristique charge/vitesse de rotation du moteur à combustion interne, laquelle est définie par une fonction du couple maximum délivré par le moteur à combustion interne en fonction de la vitesse de rotation.

10. Procédé selon la revendication 2 et au moins l'une des revendications 3 à 9, **caractérisé en ce que** dans le premier état opérationnel, le cinquième état opérationnel de soupape du mécanisme d'entraînement de soupape variable est réglé à la place du premier état opérationnel de soupape lorsque le premier état opérationnel se trouve dans une septième plage à l'intérieur de la première plage dans un diagramme caractéristique charge/vitesse de rotation du moteur à combustion interne, laquelle est délimitée à l'intérieur de la première plage par une fonction du couple maximum délivré par le moteur à combustion interne en fonction de la vitesse de rotation et un couple moteur effectif de 40 % à 80 % du couple maximum délivré par le moteur à combustion interne.

11. Procédé selon au moins l'une des revendications précédentes, **caractérisé en ce que** les paramètres d'entrée utilisés pour détecter l'état opérationnel respectif du moteur à combustion interne sont une pression de tube d'aspiration, une température de tube d'aspiration, une vitesse de rotation du moteur, un remplissage réel actuel, un écart entre les remplissages de consigne et réel, un gradient de demande de charge, par exemple sous la forme d'un gradient de pédale d'accélérateur d'une pédale d'accélérateur d'un véhicule automobile dans lequel est disposé le moteur à combustion interne et/ou une détection de pleine charge (VL) et/ou, le cas échéant, d'autres paramètres de fonctionnement du moteur à combustion interne, les grandeurs étant soit mesurées directement, soit calculées dans des modèles correspondants.

12. Procédé selon au moins l'une des revendications précédentes, **caractérisé en ce que** la détection de la condition pour la demande de charge s'effectue en utilisant une valeur de seuil pour une différence entre une pression de charge de consigne et une pression de charge réelle, une valeur de seuil pour une différence entre un remplissage de consigne et un remplissage réel et/ou une valeur de seuil pour un gradient de demande de charge, par exemple sous la forme d'un gradient de pédale d'accélérateur d'une pédale d'accélérateur d'un véhicule automobile dans lequel est disposé le moteur à combustion interne, et la détection de la condition pour la vitesse de rotation du moteur en utilisant une valeur de seuil pour une plage de vitesses de rotation du moteur.

13. Procédé selon au moins l'une des revendications précédentes, **caractérisé en ce que** la détection des conditions pour le sixième état opérationnel s'effectue en utilisant une détection de pleine charge et une valeur de seuil pour la différence entre une pression de charge de consigne et une pression de charge réelle et/ou une valeur de seuil pour la différence entre un remplissage de consigne et un remplissage réel.

14. Procédé selon au moins l'une des revendications précédentes, **caractérisé en ce qu'**un changement du premier état opérationnel de soupape au quatrième ou au sixième état opérationnel de soupape a lieu lorsque le couple délivré par le moteur à combustion interne a atteint un couple prédéfini, notamment le couple exigé.

15. Procédé selon au moins l'une des revendications précédentes, **caractérisé en ce que** dans le premier état opérationnel de soupape, au moins une soupape d'échappement est réglée sur une durée d'ouverture courte d'un angle de vilebrequin de 170° à 185°, notamment d'un angle de vilebrequin de 170° à 180°.
